# EUROPÄISCHE PATENTSCHRIFT

(11) **EP 2 564 583 B1**
(45) Veröffentlichungstag und Bekanntmachung des Hinweises auf die Patenterteilung: **11.03.2015**
(21) Anmeldenummer: 11719184.1
(22) Anmeldetag: 27.04.2011
(51) Int. Cl.: H04M 1/725, H04M 1/727, H04M 11/00, B60R 25/00, G07C 9/00

(54) **VORRICHTUNG, SYSTEM UND VERFAHREN ZUR IDENTIFIZIERUNG EINES KÜNSTLICH ERZEUGTEN MAGNETFELDS AUF EINEM MOBILTELEFON**
DEVICE, SYSTEM AND METHOD FOR IDENTIFYING AN ARTIFICIALLY GENERATED MAGNETIC FIELD ON A MOBILE TELEPHONE
DISPOSITIF, SYSTÈME ET PROCÉDÉ POUR L'IDENTIFICATION D'UN CHAMP MAGNÉTIQUE PRODUIT ARTIFICIELLEMENT SUR UN TÉLÉPHONE MOBILE

(30) Priorität: 28.04.2010 DE 102010018662
(43) Veröffentlichungstag der Anmeldung: 06.03.2013
(73) Patentinhaber: baimos technologies GmbH, 80807 München (DE)
(72) Erfinder: SPANGENBERG, Philipp, Paul, 85748 Garching (DE)
(74) Vertreter: Wegner, Hans
(86) Internationale Anmeldenummer: PCT/EP2011/002117
(87) Internationale Veröffentlichungsnummer: WO 2011/134655

(56) Entgegenhaltungen:
- DE-T2- 69 534 704
- US-A1- 2007 082 611
- US-A1- 2008 157 929

## Beschreibung

### 1. Technisches Gebiet

Die vorliegende Erfindung bezieht sich auf eine Vorrichtung, ein System und ein Verfahren zur Identifizierung eines künstlich erzeugten magnetischen Feldes auf einem Mobiltelefon.

### 2. Stand der Technik

Heutzutage werden für Schließsysteme häufig mechanische Schlüssel verwendet. Auf diese Weise kann der Zutritt, beispielsweise zu geschützten Bereichen wie Wohnungen, Büros oder Fahrzeugen reguliert werden.

Nachteilig an solchen Schließsystemen ist jedoch, dass jede Person die im Besitz eines Schlüssels ist, das zugehörige Schloss öffnen kann. Bei Verlust des Schlüssels muss unter Umständen das gesamte Schloss ausgewechselt werden. Darüber hinaus stellen solche Schlüssel einen zusätzlichen Ballast dar.

In den letzten Jahren haben sich verschiedene andere Schließsysteme basierend auf elektronischen Komponenten etabliert. Zum Beispiel kann der Zugang durch Chipkarten geregelt werden. Weitere Möglichkeiten sind Transponder und insbesondere "keyless" Systeme, die z.B. das berührungslose Entriegeln und Starten eines PKWs ermöglichen.

Alle diese Systeme haben jedoch gemeinsam, dass man einen zusätzlichen, speziellen Chip o.ä. benötigt, um einen Zugang zu ermöglichen. Dies ist häufig unbequem und ärgerlich, wenn man den jeweiligen Schlüssel vergisst oder verliert. Darüber hinaus könnten hohe Kosten durch den Austausch eines Schlosses entstehen.

Die DE 695 34 704 betrifft einen schnurlosen Kopfhörer von sehr niedriger Leistung und speziell ein Nahbereichsfunkkommunikationssystem zum Einsatz beispielsweise mit einem Telefon. Das System setzt eine zeitvariable Modulation (TVM) zusammen mit einer induktiven oder magnetischen Kopplung eines Übertragungselements und eines Empfangselements ein. Hierbei wird ein moduliertes Signal (z.B. ein Audiosignal) an den Empfänger (z.B. den Kopfhörer) übertragen, dort dekodiert und dann wiedergegeben (Abs. [0027]). Signale induzieren in einem übertragenden Magnetelement entsprechende Signale in einem empfangenden Magnetelement durch eine gegenseitige magnetische Kopplung.

Die US 2008/0157929 A1 betrifft ein Verfahren zur Funkidentifizierung unter Verwendung eines "close-range check" (Nahbereichsüberprüfung), um sogenannte Relay-Attacken zu vermeiden. Hierbei wird von einem Lesegerät ein close-range-Statussignal ausgesendet, welches von einem Transponder (z.B. Autoschlüssel) entdeckt wird. Falls die Nahbereichsüberprüfung erfolgreich ist, sendet der Transponder weitere Signale an das Lesegerät. Das Nahbereichsstatussignal kann z.B. über ein Magnetfeld mit veränderlicher Polarisation bereitgestellt werden.

Die US 2007/0082611 beschreibt ein Verfahren zur drahtlosen Kommunikation über einen Wandler ("transducer"), wobei das Verfahren Kommunikation über magnetische Kopplung ermöglicht. Insbesondere kann ein magnetisches Signal über den Wandler gesendet und empfangen werden.

Der vorliegenden Erfindung liegt daher die technische Aufgabe zugrunde, ein neuartiges Schließsystem bereitzustellen, welches ohne zusätzliche Schlüssel auf sichere Art und Weise den Zugang zu beschränkten Bereichen ermöglicht und dabei die oben genannten Probleme zumindest teilweise lösen kann.

### 3. Zusammenfassung der Erfindung,

Diese Aufgabe wird gelöst durch den Gegenstand der Ansprüche der vorliegenden Erfindung, insbesondere durch eine Vorrichtung zur Identifizierung eines künstlich erzeugten Magnetfeldes in einem Mobiltelefon. Diese Vorrichtung weist in einem Ausführungsbeispiel zumindest einen Magnetfeldsensor auf, der zur Messung des Magnetfelds der Erde geeignet ist, sowie zumindest eine Auswerteeinheit zur Auswertung eines Messsignals des Magnetfeldsensors aufgrund des künstlich erzeugten Magnetfelds und zumindest eine mit der Auswerteeinheit verbundene Funktionseinheit zum Ausführen einer Funktion durch das Mobiltelefon als Folge der Auswertung des Messsignals.

Die erläuterte Vorrichtung ermöglicht es, mithilfe eines Mobiltelefons (z.B., Smartphone, PDA, o.ä.) festzustellen, ob sich ein Mobiltelefon im Bereich eines künstlich erzeugten Magnetfeldes befindet. Basierend auf der Auswertung eines Messsignals des künstlich erzeugten Magnetfeldes kann das Mobiltelefon eine bestimmte Funktion durchführen. Beispielsweise kann ein Signal an eine Kontrolleinheit übermittelt werden, welches zu einer Zugangsberechtigung für den Nutzer des Mobiltelefons führt. Denkbar ist aber auch, dass das Mobiltelefon anhand der Auswertung des Messsignals alleine eine Funktion ausführt, die eine Identifizierung des künstlich erzeugten Magnetfelds ermöglicht, beispielsweise den Vergleich mit im Mobiltelefon gespeicherten Daten über mögliche künstliche Magnetfelder und die nachfolgende Anzeige einer Signatur o.ä. des gerade gemessenen Magnetfelds. Auf diese Weise lassen sich Zugangskontrollen vorteilhaft über ein Mobiltelefon verwirklichen, sodass keine weiteren Schlüssel, Chipkarten oder anderweitige Zugangssysteme mehr benötigt werden. Der Ansatz der vorliegenden Erfindung ist daher besonders vorteilhaft geeignet für Zugangssysteme wie sie bei Firmen verwendet werden oder auch für einen flexiblen oder mobilen Einsatz.

Darüber hinaus ist auch ein Einsatz für Automobile denkbar. Beispielsweise könnten, basierend auf einem Signal des Mobiltelefons, die Türen entriegelt oder das Auto gestartet werden. Die Erfindung nutzt in einem Ausführungsbeispiel einen vorhandenen Magnetfeldsensor zur Messung des statischen Erdmagnetfeldes, um ein geeignetes künstlich erzeugtes Magnetfeld zu vermessen und in Abhängigkeit davon ein Signal zu erzeugen. Bei dem übertragenen Signal kann es sich beispielsweise um ein Freischaltesignal handeln, mit dem das Mobiltelefon einen Empfänger anweist, einen Zugang freizugeben. Es kann sich bei dem übertragenen Signal auch um eine Signatur handeln, also eine Charakteristik des künstlich erzeugten Magnetfeldes. Dieses kann dann vom Empfänger weiter ausgewertet werden.

In einer bevorzugten Ausführungsform handelt es sich bei dem künstlich erzeugten Magnetfeld um ein zeitlich veränderliches Magnetfeld. Da das Erdmagnetfeld statisch ist, kann man ein zeitlich veränderliches Magnetfeld hiervon leicht unterscheiden. Ein Aspekt ist jedoch, dass bekannte Magnetfeldsensoren zum Messen des Erdmagnetfeldes zunächst nicht für zeitlich veränderliche Magnetfelder geeignet sind. Daher muss das künstlich erzeugte Magnetfeld geeignet angepasst werden, um die Anforderungen des Magnetfeldsensors erfüllen zu können.

Gemäß einer weiteren Ausführungsform ist das Magnetfeld in seiner magnetischen Feldstärke und / oder Ausrichtung zeitlich veränderlich. Solche Variationen sind besonders geeignet, um künstlich erzeugte Magnetfelder mit einer Signatur zu versehen, sodass sie sich von dem statischen Erdmagnetfeld hinreichend deutlich unterscheiden.

Besonders bevorzugt ist die Frequenz der zeitlichen Veränderung veränderlich. Ein weiteres Merkmal zur Abgrenzung vom statischen Erdmagnetfeld kann die zeitliche Veränderung einer Frequenz darstellen. Auf diese Weise lassen sich einerseits verschiedenste Signaturen erzeugen, die andererseits auch genügend Unterscheidungskraft besitzen, um sie vom Erdmagnetfeld, bzw. auch anderen künstlich erzeugten Magnetfeldern zu unterscheiden.

In einer weiteren Ausführungsform verfügt das Mobiltelefon bevorzugt über einen zweiten Datenkanal, der mindestens ein zweites Signal empfängt und mit dem ersten Signal vergleicht. Es sind Umgebungen denkbar, in denen mehrere künstlich erzeugte Magnetfelder existieren und von einem Mobiltelefon erkannt werden. In diesem Fall ist es sinnvoll, wenn das Mobiltelefon ein zweites Signal empfängt, welches mit einem ersten Signal verglichen werden kann. Auf diese Weise kann bestimmt werden, ob das richtige künstlich erzeugte Magnetfeld gemessen wurde.

Bevorzugt umfassen die Möglichkeiten der Übermittlung bzw. des Empfangs über den ersten und / oder den zweiten Datenkanal eine Datenübertragung mit Bluetooth und / oder IrDA und / oder WLAN. Die Übertragung auf den Datenkanälen kann auf verschiedene Arten erfolgen. Moderne Mobiltelefone verfügen im Allgemeinen über eine Bluetooth- , Infrarot- bzw. WLAN-Schnittstelle, die hierfür alleine oder in Kombination, gegebenenfalls auch mit weiteren Datenübertragungsverfahren, einfach eingesetzt werden können. Häufig müssen die Signale nur über kurze Distanzen übertragen werden, so dass diese Übertragungsarten besonders geeignet sind. Jedoch ist es auch denkbar, die Signale z.B. über eine Internetverbindung zu übertragen, je nach Einsatzzweck.

In einer weiteren bevorzugten Ausführungsform wird das erste und / oder das zweite Signal verschlüsselt übertragen bzw. empfangen. Um Missbrauch zu vermeiden, beispielsweise um den Zugang zu sicherheitsrelevanten Bereichen weiter abzusichern, können die Signale geeignet verschlüsselt werden. Auf diese Weise reicht ein bloßes Messen der Eigenschaften des künstlich erzeugten Magnetfeldes nicht mehr aus, um Zugang zu erhalten.

Vorzugsweise wird ein Challenge-Response-Verfahren zur Verschlüsselung verwendet. Hierbei könnten die Informationen aus den Signalen verschlüsselt und nach der Übertragung geprüft werden. Hierzu ist es bevorzugt, wenn den beiden Kommunikationspartnern ein kryptographischer Schlüssel bekannt ist.

In einer weiteren Ausführungsform ist die Auswerteeinheit ausgebildet, um Messsignale von mehreren künstlich erzeugten Magnetfeldern auszuwerten. Grundsätzlich ist es möglich, dass mehrere künstlich erzeugte Magnetfelder im Raum vorhanden oder zeitlich gestaffelt aktiv sind. Hierdurch ist eine genauere Lokalisierung eines Schlüssels möglich. Es ist jedoch zu bedenken, dass in diesem Fall spezifisches Wissen über die verschiedenen Magnetfelder im Mobiltelefon vorhanden sein muss. Es wäre aber auch möglich, diese Informationen z.B. über einen Datenkanal auf das Mobiltelefon zu übertragen.

Gemäß einem weiteren Aspekt der Erfindung wird die technische Aufgabe gelöst durch ein System zur Identifizierung eines künstlich erzeugten Magnetfeldes mit einem Mobiltelefon. Das System umfasst eine Vorrichtung wie oben beschrieben und eine Quelle für das künstliche erzeugte magnetische Feld. Die Quelle für das künstlich erzeugte Magnetfeld könnte in der Nähe z.B. der zu öffnenden Tür angebracht sein und auf diese Weise den sensitiven Bereich genau definieren. In diesem sensitiven Bereich kann das Mobiltelefon das Messsignal auswerten und anschließend ein geeignetes Kontrollsignal übermitteln.

Bevorzugt weist das System eine Kontrolleinheit zur Auswertung des ersten Signals auf. Das übertragene Signal kann hierbei nach dem Empfang in der Kontrolleinheit ausgewertet werden, um zu ermitteln, ob das richtige Magnetfeld ausgewertet wurde und gegebenenfalls Zugang ermöglichen oder auch einen Alarm auslösen.

In einer weiteren bevorzugten Ausführungsform weist das System ferner eine zweite Kommunikationseinheit zum Übertragen des zweiten Signals an das Mobiltelefon auf. In dieser Ausführungsform kann ein erstes Signal mit dem empfangenen zweiten Signal verglichen werden, um die Ortung des Mobiltelefons zu überprüfen, bzw. um Zugang zu gewähren.

In einem weiteren Aspekt kann die oben beschriebene Vorrichtung in einem Mobiltelefon verwirklicht sein. Heutzutage verfügen die meisten Menschen über ein Mobiltelefon, welches sie immer mit sich führen. Auf diese Weise kann aufgrund der Ortung und der Auswertung eines Messsignals des Mobiltelefons der Zugang zu speziellen Bereichen (z.B. zugangsbeschränkte Büros, Labors oder Automobile) gewährt werden. Insbesondere werden keine weiteren Schlüssel benötigt.

Gemäß einem weiteren Aspekt der Erfindung kann die der Erfindung zugrunde liegende Aufgabe auch durch ein Verfahren zur Identifizierung eines künstlich erzeugten Magnetfeldes mit einem Mobiltelefon gelöst werden, wobei das Verfahren folgende Schritte aufweist: Messen mindestens eines künstlich erzeugten Magnetfeldes mit einem Magnetfeldsensor, der zum Messen des Erdmagnetfelds geeignet ist; Auswerten eines Messsignals des Magnetfeldsensors und Ausführen einer Funktion im Mobiltelefon als Folge der Auswertung des Messsignals.

### 4. Kurze Beschreibung der begleitenden Figuren

Im Folgenden werden Aspekte der vorliegenden Erfindung unter Bezugnahme auf die begleitenden Figuren erläutert. Die Figuren zeigen:
- **Fig. 1**:: zeigt eine schematische Ausführungsform der vorliegenden Erfindung; und
- **Fig. 2:**: zeigt eine weitere schematische Ausführungsform der vorliegenden Erfindung.

### 5. Detaillierte Beschreibung von bevorzugten Ausführungsformen

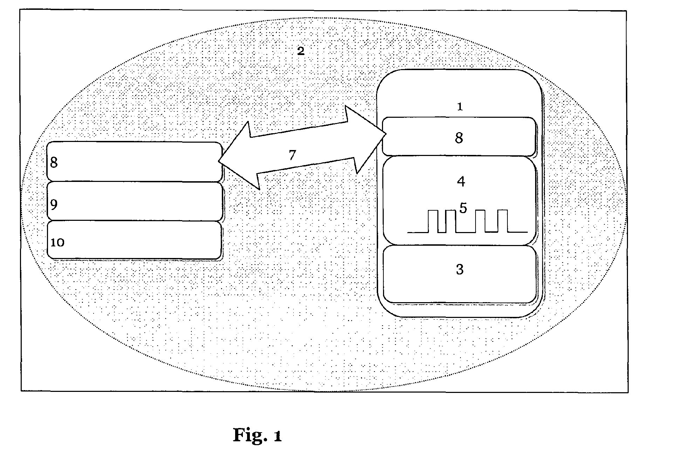

Figur **1** zeigt ein künstlich erzeugtes Magnetfeld **2**, welches sich über einen speziellen und räumlich begrenzten Bereich erstrecken kann. In diesem Magnetfeld **2** befindet sich ein Mobiltelefon **1**, welches über einen oder mehrere elektronische Magnetfeldsensoren **3** verfügt. In Mobiltelefonen **1** wird heutzutage eine Vielzahl von Sensoren verbaut, z.B. Lichtsensoren, Bewegungssensoren und elektronische Magnetfeldsensoren **3**. Die Magnetfeldsensoren **3** werden heutzutage vorzugsweise dafür verwendet, mittels des statischen Magnetfeldes der Erde die Ausrichtung bzw. Blickrichtung des Mobiltelefons **1** zu ermitteln. Damit lässt sich das Mobiltelefon **1** beispielsweise zur Navigation verwenden.

Insbesondere kann der elektronische Magnetfeldsensor **3** im Mobiltelefon **1** dafür verwendet werden, das künstlich erzeugte Magnetfeld **2** zu erkennen und auszuwerten. Wie in Fig. **1** skizziert, kann anhand der Signatur **5** des künstlich erzeugten Magnetfeldes das Mobiltelefon **1** geortet werden, d.h., es kann ermittelt werden, ob sich das Mobiltelefon **1** in einem bestimmten Bereich befindet. Dies kann der Wirkungsbereich des künstlich erzeugten Magnetfeldes **2** sein. Wie in Fig. **1** angedeutet, kann es sich bei der Signatur **5** des künstlich erzeugten Magnetfeldes **2** um ein veränderliches Magnetfeld handeln. Es ist jedoch auch denkbar, dass es sich um ein statisches Magnetfeld handelt. Beispielsweise könnte ein Winkel zwischen dem Erdmagnetfeld und dem künstlich erzeugten Magnetfeld **2** verwendet werden. Die Signatur **5** kann entweder direkt oder in Form eines anders gearteten Signals weiterverarbeitet (z.B. über den Datenkanal 7 übermittelt) werden.

Das Mobiltelefon **1** verfügt über eine Signalauswertungseinheit **4**. Diese Signalauswertungseinheit **4** kann in Kenntnis einer oder mehrerer Signaturen **5** sein, wobei die Signaturen **5** verschiedene geeignete Kombinationen von Feldstärke, Ausrichtung oder auch zeitlicher Änderung der vorgenannten Werte umfassen können.

Dieser Fall ist dann besonders von Interesse, wenn festgestellt werden soll, ob sich das Mobiltelefon **1** in einem speziellen Bereich, also in einem Wirkungsbereich eines künstlich erzeugten Magnetfeldes **2** befindet. Wird der spezielle Bereich von einem künstlich erzeugten Magnetfeld **2** ganz oder teilweise ausgefüllt, kann auf Grund der bekannten Signatur **5** des speziellen Magnetfeldes **2** festgestellt werden, ob das Mobiltelefon **1** diese erkennt. Im Fall der Erkennung ist sichergestellt, dass sich das Mobiltelefon **1** in künstlich erzeugten Magnetfeld **2** und somit im speziellen Bereich befindet. Anschließend kann ein Signal, beispielsweise ein Identifizierungssignal, über den Datenkanal 7 gesendet werden.

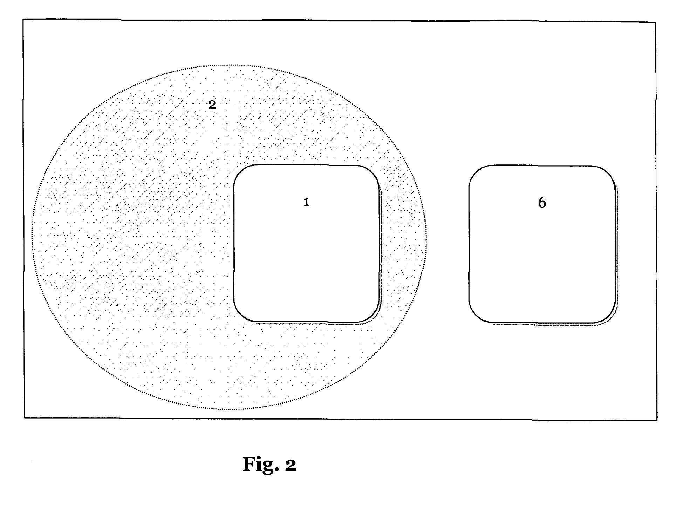

In Fig. **2** ist skizziert, dass ein Mobiltelefon **6** außerhalb des speziellen Bereichs und somit außerhalb des künstlich erzeugten Magnetfeldes **2**, die Signatur **5** des speziellen Magnetfeldes **2** nicht erfolgreich erkennen und auswerten kann.

Weiterhin muss der Signalauswertungseinheit **4** die Signatur **5** des künstlich erzeugten Magnetfeldes **2** nicht vorab bekannt sein, sondern diese kann über einen anderen Datenkanal 7 z.B. Bluetooth, IrDA, WLAN o.ä. über die entsprechenden Kommunikationseinheiten **8** an die Signalauswertungseinheit **3** des Mobiltelefons **1** übermittelt werden. Auch andere Übertragungsarten, wie beispielsweise über das Internet sind denkbar. Eine Kombination verschiedener Übertragungsarten für die Datenkanäle ist auch möglich. Diese Ausführungsform kann dann vorteilhaft sein, wenn verschiedene Magnetfelder **2** in der gleichen Umgebung vorhanden sind und / oder z.B. die Signatur **5** der Magnetfelder **2** einzigartig oder veränderbar bleiben soll. Insbesondere kann durch mehrere Felder eine genauere Ortung des Mobiltelefons **1** erreicht werden. Beispielsweise kann bestimmt werden, ob sich das Mobiltelefon **1** im Innenraum eines Automobils oder außerhalb befindet.

Es ist auch denkbar, dass die Signatur **5** des speziellen Magnetfelds **2** nur in Teilen oder gar nicht vor der Erkennung und Auswertung des Magnetfeldes **2** am Mobiltelefon **1** der Signalauswertungseinheit **4** bekannt ist. In diesem Fall wird eine gefundene Signatur **5** nicht auf dem Mobiltelefon **1** einem bestimmten künstlich erzeugten Magnetfeld zugeordnet, sondern jede von der Signalauswerteeinheit **4** empfangene Signatur **5** an die Kontrolleinheit **9** des künstlich erzeugten Magnetfeldes **2** über den anderen Datenkanal 7 übermittelt und die Entscheidung, ob die passende Signatur **5** erkannt wurde und das Mobiltelefon **1** somit im künstlich erzeugten Magnetfeld **2** und somit im speziellen Bereich ist, der Kontrolleinheit **9** überlassen. Darüber hinaus ist es auch möglich, ein anders geartetes Signal über den Datenkanal 7 zu übermitteln. Dieses Signal ist vorzugsweise geeignet, um die Signatur **5** eindeutig darzustellen.

Es kann im Folgenden auch noch eine genauere Auswertung (z.B. der Stärke des künstlich erzeugten Magnetfeldes **2**) erfolgen, worüber sich die Position des Mobiltelefons **1** im Verhältnis zum künstlich erzeugten Magnetfeld **2** noch weiter einschränken lässt.

Dankbar ist, dass die Signatur **5** des künstlich erzeugten Magnetfeldes **2** auf den elektronischen Magnetfeldsensor **3** im Mobiltelefon **1** abgestimmt sein sollte, um eine gute Erkennung zu gewährleisten. So kann beispielsweise das künstlich erzeugte magnetische Feld **2** eine ähnliche Signatur **5** wie das Magnetfeld der Erde aufweisen und sich beispielsweise durch eine spezielle Folge von Veränderungen der Magnetfeldausrichtung unterscheiden, was sich wiederum auf die Signatur **5** auswirkt. Mit einem solchen Verfahren wird es möglich, den elektronischen Magnetfeldsensor **3** im Mobiltelefon **1** welcher beispielsweise für die Erkennung des Erdmagnetfelds optimiert wurde, optimal für die Erkennung und Auswertung eines speziellen Magnetfeldes **2** zu verwenden.

Um dies zu erreichen, kann es erforderlich sein, dass die Parameter des künstlich erzeugten Magnetfelds **2** angepasst werden. Beispielsweise werden heute schon Magnetfelder zu Lokalisierung von "Keyless Go" Schlüsseln in und um ein Fahrzeug verwendet. Die Frequenzen dieser Felder können in der Art beschaffen sein, dass ein elektronischer Magnetfeldsensor **3** im Mobiltelefon **1** dieses nicht erkennt. Wird beispielsweise die Frequenz wesentlich reduziert, vorzugsweise in den Bereich von wenigen Hertz, kann es ermöglicht werden, dass der elektronische Magnetfeldsensor **3** im Mobiltelefon **1** das spezielle Magnetfeld **2** erkennt. Gleichzeitig muss sichergestellt sein, dass keine Interferenzen mit anderen Systemen entstehen (z.B. mit anderen Anwendungen die auf den elektronischen Kompass des Geräts zurückgreifen oder die sich in der Nähe des künstlich erzeugten Magnetfeldes **2** befinden). Eine mögliche Art der Implementierung ist, dass die Signatur nur mit spezifischen Wissen (was die Signatur ausmacht) erkannt wird und andere Geräte die Veränderungen im Magnetfeld nur als "Rauschen" wahrnehmen oder auf Grund der Trägheit des Sensors bzw. auf Grund von Toleranzen in der Signalausweitung nicht wahrgenommen wird.

Darüber hinaus kann die Veränderung der magnetischen Flussdichte durch die materialspezifische magnetische Permeabilität von Stoffen / Gegenständen im Raum zur Ortung verwendet werden. Dies ist insoweit vorteilhaft, da beispielsweise für ein "Keyless Go" System die Innenraum / Außenraum-Abgrenzung eine sehr große Rolle spielt und sich ein künstliches Magnetfeld **2** an dieser Grenze durch die unterschiedliche magnetische Permeabilität zwischen Luft/Fahrzeug/Luft signifikant ändert. Diese Änderung ist messbar und charakteristisch.

Grundsätzlich ist es möglich, dass mehrere künstlich erzeugte Magnetfelder im Raum vorhanden sind, bzw. im zeitlichen Intervall nacheinander aktiv sind. Somit ist es möglich eine noch genauere Lokalisierung von Schlüsseln zu erreichen. Hierfür muss (ähnlich wie für die Erkennung der Signatur) spezifisches Wissen über die speziellen magnetischen Felder im Mobiltelefon **1** vorhanden sein.

Damit das System (das Verfahren zur Ortung) nicht getäuscht werden kann, können die über die Datenkanäle ausgetauschten Signaturen **5** und / oder Referenzwerte und / oder Signale entsprechend verschlüsselt werden. Hierbei kommt vorzugsweise ein Challenge-Response-Verfahren oder eine digitale Signatur zum Einsatz.

Das bekannte Challenge-Response-Verfahren kann beispielsweise die empfangene Signatur bzw. die in der Signatur enthaltenen Informationen verschlüsseln und die Kontrolleinheit kann dies nach Empfang über den Datenkanal prüfen. Grundlage hierfür ist, dass ein kryptographischer Schlüssel beiden Partnern bekannt ist. Dieser kryptographische Schlüssel kann sich auch ändern, muss aber wiederum beiden Partnern bekannt sein.

Die digitale Signatur im Sinne eines Public-Private-Key-Infrastructure (PKI) Verfahrens ermöglicht es der Kontrolleinheit **9** die über den Datenkanal 7 übertragenen Daten auf deren Herkunft zu prüfen. Dies ist möglich, wenn auf dem Mobiltelefon **1** ein entsprechendes PKI-Zertifikat für die Erstellung von digitalen Signaturen installiert ist und das Mobiltelefon **1** die Daten für die Kontrolleinheit **2** entsprechend vor dem Versand signiert. Umgekehrt kann auch der Datenverkehr zum Mobiltelefon **1** entsprechend von der Kontrolleinheit **2** signiert sein.

Eine Verschlüsselung der Daten über ein PKI-Zertifikat ist zusätzlich möglich. Entsprechend der Grundlagen von PKI müssen die Zertifikate auf den Partnern nicht gleich sein, sondern werden von einer vertrauenswürdigen Zentrale ausgestellt und verwaltet.

## Patentansprüche

1. Vorrichtung in einem Mobiltelefon (1) zur Identifizierung eines künstlich erzeugten Magnetfeldes (2), aufweisend:
a) zumindest einen Magnetfeldsensor (3) der zur Messung des Magnetfelds der Erde geeignet ist (2);
b) zumindest eine Auswertungseinheit (4) zur Auswertung eines Messsignals des Magnetfeldsensors (3) aufgrund des künstlich erzeugten Magnetfelds; und
c) zumindest eine mit der Auswerteeinheit verbundene Funktionseinheit (8) zum Ausführen einer Funktion durch das Mobiltelefon als Folge der Auswertung des Messsignals;
d) wobei die Funktionseinheit ausgebildet ist, ein erstes Signal über einen ersten Datenkanal (7) an eine Kontrolleinheit (9) zu übermitteln, wobei das erste Signal ein Freischaltesignal oder eine Signatur des künstlich erzeugten Magnetfelds ist.

2. Vorrichtung nach Anspruch 1, wobei das künstlich erzeugte Magnetfeld (2) ein zeitlich veränderliches Magnetfeld ist.

3. Vorrichtung nach einem der vorhergehenden Ansprüche, wobei das Magnetfeld in seiner magnetische Feldstärke und / oder Ausrichtung zeitlich veränderlich ist.

4. Vorrichtung nach dem vorhergehenden Anspruch 2 oder 3, wobei die Frequenz der zeitlichen Veränderung veränderlich ist.

5. Vorrichtung nach einem der vorhergehenden Ansprüche, wobei das Mobiltelefon (1) über einen zweiten Datenkanal (7) mindestens ein zweites Signal (5) empfängt und mit dem ersten Signal vergleicht, wobei das zweite Signal eine Signatur des künstlich erzeugten Magnetfelds ist.

6. Vorrichtung nach einem der vorhergehenden Ansprüche, wobei die Übermittlung bzw. der Empfang über den ersten und / oder den zweiten Datenkanal eine Datenübertragung mit Bluetooth und / oder IrDA und / oder WLAN umfasst.

7. Vorrichtung nach einem der vorhergehenden Ansprüche, wobei das erste und / oder das zweite Signal verschlüsselt übertragen bzw. empfangen werden.

8. Vorrichtung nach Anspruch 7, wobei ein Challenge-Response-Verfahren zur Verschlüsselung verwendet wird.

9. Vorrichtung nach einem der vorhergehenden Ansprüche, wobei die Auswerteeinheit ausgebildet ist, um Messsignale von mehreren künstlich erzeugten Magnetfeldern auszuwerten.

10. System zur Identifizierung eines künstlich erzeugten Magnetfeldes (2) mit einem Mobiltelefon (1), aufweisend
a) eine Vorrichtung gemäß einem der Ansprüche 1 bis 9; und
b) eine Quelle für das künstliche erzeugte magnetische Feld (2).

11. System nach Anspruch 10, ferner aufweisend c) eine Kontrolleinheit (9) zur Auswertung des ersten Signals.

12. System nach Anspruch 10 oder 11, ferner aufweisend eine Kommunikationseinheit zum Übertragen des zweiten Signals an das Mobiltelefon.

13. Mobiltelefon mit einer Vorrichtung nach einem der Ansprüche 1-9.

14. Verfahren zur Identifizierung eines künstlich erzeugten Magnetfeldes (2) mit einem Mobiltelefon nach Anspruch 13, wobei das Verfahren folgende Schritte aufweist:
a) Messen mindestens eines künstlich erzeugten Magnetfeldes (2) mit einem Magnetfeldsensor, der zum Messen des Erdmagnetfelds geeignet ist;
b) Auswerten eines Messsignals des Magnetfeldsensors; und
c) Ausführen einer Funktion im Mobiltelefon als Folge der Auswertung des Messsignals;
d) Übermitteln eines ersten Signals über einen ersten Datenkanal (7) an eine Kontrolleinheit (9), wobei das erste Signal ein Freischaltesignal oder eine Signatur des künstlich erzeugten Magnetfelds ist.

## Claims

1. Apparatus in a mobile telephone (1) for identification of an artificially created magnetic field (2), comprising:
a) at least one magnetic field sensor (3) for measuring the earth's magnetic field (2);
b) at least one evaluation unit (4) for evaluating a measuring signal of the magnetic field sensor (3) based on the artificially created magnetic field; and
c) at least one function unit (8) connected with the evaluation unit for executing, by the mobile telephone, a function as a result of the evaluation of the measured signal;
d) wherein the function unit is adapted to transmit a first signal via a first data channel (7) to a control unit (9), wherein the first signal is one of an activation signal or a signature of the artificially created magnetic field.

2. Apparatus according to claim 1, wherein the artificially created magnetic field (2) is a time variable magnetic field.

3. Apparatus according to any of the preceding claims, wherein the magnetic field is time variable with respect to its magnetic field strength and / or direction.

4. Apparatus according to one of the preceding claims **2** or 3, wherein the frequency of the time change is variable.

5. Apparatus according to any of the preceding claims, wherein the mobile telephone (1) receives, via a second data channel (7), at least a second signal (5), and compares this signal with the first signal, wherein the second signal is a signature of the artificially created magnetic field.

6. Apparatus according to any of the preceding claims, wherein the transmission or the reception via the first and / or the second data channel comprises a data transmission using Bluetooth and / or IrDA and / or WLAN.

7. Apparatus according to any of the preceding claims, wherein the first and / or the second signal are transmitted or received encrypted.

8. Apparatus according to claim 7, wherein the encryption is based on a Challenge-Response-method.

9. Apparatus according to any of the preceding claims, wherein the evaluation unit is adapted to evaluate measured signals of a plurality of artificially created magnetic fields.

10. System for identifying an artificially created magnetic field (2), using a mobile telephone (1), comprising:
a) an apparatus according to any of the claims 1 to 9; and
b) a source for the artificially created magnetic field (2).

11. System according to claim 10, further comprising
c) a control unit (9) for evaluating the first signal.

12. System according to claim 10 or 11, further comprising a communication unit for transmitting the second signal to the mobile telephone.

13. Mobile telephone comprising an apparatus according to any of the claims 1 to 9.

14. Method for identification of an artificially created magnetic field (2), using a mobile telephone according to claim 13, wherein the method comprises the following steps:
a) measuring at least one artificially created magnetic field (2) using a magnetic field sensor, that is adapted for measuring the earth's magnetic field;
b) evaluating a measured signal of the magnetic field sensor; and
c) executing a function in the mobile telephone as a result of the evaluation of the measured signal;
d) transmitting a first signal via a first data channel (7) to a control unit (9), wherein the first signal is one of an activation signal or a signature of the artificially created magnetic field.

## Revendications

1. Dispositif dans un téléphone mobile (1) pour l'identification d'un champ magnétique généré artificiellement (2), comprenant :
a) au moins un capteur de champ magnétique (3) qui est apte à mesurer le champ magnétique terrestre (2) ;
b) au moins une unité d'analyse (4) pour l'analyse d'un signal de mesure du capteur de champ magnétique (3) sur la base du champ magnétique généré artificiellement ; et
c) au moins une unité fonctionnelle (8) reliée à l'unité d'analyse pour l'exécution d'une fonction par le téléphone mobile à la suite de l'analyse du signal de mesure ;
d) l'unité fonctionnelle étant conçue pour transmettre un premier signal à une unité de contrôle (9) par l'intermédiaire d'un premier canal de données (7), le premier signal étant un signal de validation ou une signature du champ magnétique généré artificiellement.

2. Dispositif selon la revendication 1, dans lequel le champ magnétique généré artificiellement (2) est un champ magnétique variable dans le temps.

3. Dispositif selon l'une des revendications précédentes, dans lequel le champ magnétique est variable dans le temps du point de vue de son intensité de champ magnétique et/ou de son orientation.

4. Dispositif selon la revendication précédente 2 ou 3, dans lequel la fréquence de la variation dans le temps est variable.

5. Dispositif selon l'une des revendications précédentes, dans lequel le téléphone mobile (1) reçoit au moins un deuxième signal (5) par l'intermédiaire d'un deuxième canal de données (7) et le compare avec le premier signal, le deuxième signal étant une signature du champ magnétique généré artificiellement.

6. Dispositif selon l'une des revendications précédentes, dans lequel la transmission ou la réception par l'intermédiaire du premier et/ou du deuxième canal de données comprend une transmission de données par Bluetooth et/ou IrDA et/ou WLAN.

7. Dispositif selon l'une des revendications précédentes, dans lequel le premier et/ou le deuxième signal sont transmis ou reçus sous forme cryptée.

8. Dispositif selon la revendication 7, dans lequel un procédé de défi-réponse est utilisé pour le cryptage.

9. Dispositif selon l'une des revendications précédentes, dans lequel l'unité d'analyse est conçue pour analyser des signaux de mesure de plusieurs champs magnétiques générés artificiellement.

10. Système d'identification d'un champ magnétique généré artificiellement (2) avec un téléphone mobile (1), comprenant
a) un dispositif selon l'une des revendications 1 à 9 ; et
b) une source pour le champ magnétique généré artificiellement (2).

11. Système selon la revendication 10, comprenant en outre
c) une unité de contrôle (9) pour l'analyse du premier signal.

12. Système selon la revendication 10 ou 11, comprenant en outre une unité de communication pour la transmission du deuxième signal au téléphone mobile.

13. Téléphone mobile équipé d'un dispositif selon l'une des revendications 1 à 9.

14. Procédé d'identification d'un champ magnétique généré artificiellement (2) avec un téléphone mobile selon la revendication 13, lequel procédé comprend les étapes consistant à :
a) mesurer au moins un champ magnétique généré artificiellement (2) avec un capteur de champ magnétique apte à mesurer le champ magnétique terrestre ;
b) analyser un signal de mesure du capteur de champ magnétique ; et
c) exécuter une fonction dans le téléphone mobile à la suite de l'analyse du signal de mesure ;
d) transmettre un premier signal à une unité de contrôle (9) par l'intermédiaire d'un premier canal de données (7), le premier signal étant un signal de validation ou une signature du champ magnétique généré artificiellement.
